# FASCICULE DE BREVET EUROPEEN

(11) **EP 0 744 063 B1**
(45) Date de publication et mention de la délivrance du brevet: **13.08.1997**
(21) Numéro de dépôt: 95908999.6
(22) Date de dépôt: 08.02.1995
(51) Int. Cl.: G07F 7/08

(54) **PROCEDE DE TRANSACTION PAR CARTE A PUCE**
TRANSAKTIONSVERFAHREN MIT EINER CHIPKARTE
SMART CARD TRANSACTION METHOD

(30) Priorité: 09.02.1994 FR 9401463
(43) Date de publication de la demande: 27.11.1996
(73) Titulaire: GEMPLUS CARD INTERNATIONAL S.A., F-13420 Gémenos (FR)
(72) Inventeur: VALADIER, Jean-Louis, F-13400 Aubagne (FR)
(74) Mandataire: Schmit, Christian Norbert Marie
(86) Numéro de dépôt international: FR9500151
(87) Numéro de publication internationale: WO9522125

(56) Documents cités:
- EP-A- 0 193 635
- EP-A- 0 378 454
- EP-A- 0 423 035
- FR-A- 2 605 770
- FR-A- 2 685 520

## Description

L'invention concerne les cartes à puces et les systèmes de transaction utilisant ces cartes. Elle concerne plus particulièrement les cartes à puces dont la puce comporte une mémoire et un microprocesseur. On peut même envisager d'avoir au moins deux puces, une pour la mémoire et une pour le microprocesseur, sur la même carte.

Un système de transaction avec carte à puce typique est le porte monnaie électronique qui fonctionne de la manière suivante : une carte à puce d'un particulier peut être rechargée auprès d'une institution bancaire pour contenir une nouvelle valeur fiduciaire remplaçant des billets de banque, le compte en banque du particulier étant débité d'une valeur correspondante; cette carte peut être utilisée pour un échange d'argent avec un tiers (un commerçant par exemple) ayant une carte similaire : une partie de l'argent disponible dans la première carte est mise au crédit de la deuxième dont le solde est ainsi augmenté; le solde de la première carte est diminué d'autant. Après un certain nombre d'opérations de ce genre, la deuxième carte peut être déchargée auprès d'une institution bancaire pour transférer le solde de la carte vers un compte du titulaire de cette carte.

Un autre système de transaction peut consister à recharger des cartes périodiquement à des bornes de rechargement réparties dans une zone géographique, puis à consommer des biens ou des services à l'aide de la carte; le solde de la carte décroît au fur et à mesure de l'utilisation jusqu'à épuisement du montant rechargé. Le montant rechargé périodiquement peut être fixe ou variable. Il peut être le même pour toute une population de titulaires de cartes, par exemple dans une application où on recharge des cartes de restaurant d'entreprise en début du mois avec un nombre de repas fixe ou une somme d'argent fixe.

Les systèmes de transaction, aussi bien d'unités de valeur que d'informations, exigent en général des précautions contre les fraudes. Pour cela, on utilise des informations confidentielles, des codes secrets, des algorithmes de vérification de codes secrets, des algorithmes de cryptage d'informations, etc.

Dans la demande de brevet FR-A-2653648 du déposant, on a décrit des systèmes de transaction sécurisée, pour des cartes à puces ne comportant pas nécessairement de microprocesseur. Essentiellement, la carte est une carte à mémoire dans laquelle la mémoire non volatile comporte au moins quatre zones différentes. Une première zone est réservée à des données d'identification de la carte (il n'y a en principe pas deux cartes ayant les mêmes données d'identification). Une deuxième zone est réservée à un solde de compte, qui diminue au fur et à mesure des utilisations. Une troisième zone enregistre le nombre d'opérations effectuées avec la carte. Et une quatrième zone contient un certificat servant à vérifier que le solde de la carte n'a pas été modifié entre deux opérations. Le certificat est placé dans cette quatrième zone par le lecteur de carte à l'issue d'une transaction; il est calculé en faisant intervenir l'identité de la carte, le solde, et le nombre d'opérations. Lors d'une utilisation suivante de la carte, le lecteur de carte vérifie, à l'aide du même algorithme, que le certificat est bien celui qui correspond à l'identité de la carte, au solde inscrit, et au nombre d'opérations inscrit. Si ce n'est pas le cas, il prend des mesures en rapport avec la violation détectée; par exemple il interdit toute transaction, ou il conserve la carte, ou il transmet à un serveur central l'identité de la carte, etc.

Bien que ce système soit très simple et donne une bonne sécurité, on s'est aperçu qu'il présentait des inconvénients pour certaines organisations de systèmes de transaction.

Par exemple, une organisation de transaction dans lequel ce mode de sécurité présente des inconvénients est la suivante : lorsque les utilisateurs doivent recharger leur carte auprès d'une institution, à partir de terminaux de rechargement répartis dans une zone géographique déterminée et reliés à un serveur central, les vérifications sont faites par le serveur, et cela occupe beaucoup de temps de transmission en ligne si les utilisateurs sont nombreux. S'ils doivent tous recharger leurs cartes à peu près au même moment, par exemple en début de mois, le problème est encore plus délicat. Il s'agit là d'un système de rechargement en liaison directe ("on-line" en anglais); la carte, le terminal de rechargement et le serveur sont en effet reliés entre eux pendant la transaction.

Ainsi les solutions connues à ce jour ne sont pas satisfaisantes.

Soit les solutions existantes provoquent un engorgement du réseau de transmission qui relie les terminaux au serveur au moment des rechargements. C'est le cas comme on vient de le voir lorsque un grand nombre d'utilisateurs doivent recharger leur carte en même temps à partir de terminaux car les rechargements se font ONLINE.

Soit les solutions existantes nécessitent l'utilisation de terminaux comportant du matériel spécifique pour faire du calcul de fonctions complexes de chiffrement et des moyens de mémorisation sécurisés de toutes les données secrètes servant à ces calculs pour toutes les cartes susceptibles de se connecter au terminal. De telles solutions imposent un partage des secrets terminal/carte ce qui est lourd à gérer et ce qui impose l'utilisation de terminaux spécifiques pour de telles transactions.

La présente invention permet de résoudre ce problème et en outre d'apporter toute la sécurité nécessaire à ces transactions sans imposer de limitation ou des complications pour le matériel utilisé.

Un autre objet de la présente invention est d'empêcher qu'une carte ne puisse être rechargée à partir de plusieurs terminaux au cours d'une même période lorsque celle-ci a déjà été chargée à partir d'un terminal pour cette période donnée.

Ainsi la présente invention permet par conséquent d'utiliser des terminaux standards sans composant spécifique destiné à assurer la sécurité ou à empêcher des rechargements multiples pendant une période donnée. La présente invention propose une solution simple pour obtenir une sécurité satisfaisante pour un grand nombre d'applications.

La présente invention a plus particulièrement pour objet un procédé de transaction selon la revendication 1 et un procédé de transaction selon la revendication 2.

Ainsi selon l'invention, la carte comporte une zone d'enregistrement non volatile contenant le nombre d'opérations d'un type déterminé effectuées par le titulaire de la carte, ce nombre étant incrémenté lorsqu'une opération de ce type est effectuée mais n'étant pas incrémenté lorsque la carte est utilisée pour des opérations d'un autre type. Ainsi, si la carte doit effectuer des opérations de débit et des opérations de crédit, un compteur spécifique est prévu pour les opérations de crédit seulement; et un autre pour les opérations de débit seulement.

Selon l'invention des secrets nécessaires pour effectuer des débits seront ainsi différents de ceux nécessaires pour effectuer des rechargements.

Le compteur d'opérations est irréversible, c'est-à-dire que la zone de mémoire est organisée de manière que le contenu lu ne puisse correspondre qu'à un nombre d'unités variant toujours dans le même sens.

Les données relatives à une carte peuvent comporter en outre le montant du rechargement.

Selon un autre objet de l'invention les cartes comportent une mémoire non volatile et le compteur du nombre de rechargement est réalisé au moyen d'une zone (22) de mémoire non volatile de la carte dans laquelle le microprocesseur inscrit un nombre (NBR) représentant le compte du nombre d'opérations de rechargement effectuées ce nombre étant incrémenté irréversiblement à chaque opération de rechargement.

Selon un autre objet de l'invention les données relatives à chaque carte peuvent comporter en outre un code d'identification (PIN).

Selon un autre objet de l'invention le terminal lit le contenu (NBR) du compteur d'une carte et le compare au numéro de comptage de rechargement qu'il possède pour le cycle en cours, et refuse de transmettre des données à la carte lorsque le contenu du compteur est supérieur ou égal au numéro de comptage de rechargement.

L'invention s'applique à un système de gestion collective de nombreux restaurants d'entreprise ayant chacun plusieurs terminaux de rechargement dispersés à la disposition des employés de l'entreprise.

D'autres caractéristiques et avantages de l'invention apparaîtront à la lecture de la description détaillée qui suit et qui est faite en référence aux dessins annexés dans lesquels :
- la figure 1 représente l'organisation générale d'une application dans laquelle la présente invention peut être avantageusement mise en oeuvre;
- la figure 2 représente schématiquement diverses zones de mémoire non-volatile d'une carte utilisable dans le procédé selon l'invention;
- la figure 3 représente un organigramme général des étapes d'un procédé de rechargement de carte selon l'invention.

On notera par la suite que le serveur n'est pas forcément physiquement relié aux terminaux : une disquette de mémoire magnétique produite par le serveur peut être transportée dans les terminaux pour y placer les données nécessaires aux vérifications d'habilitation des cartes.

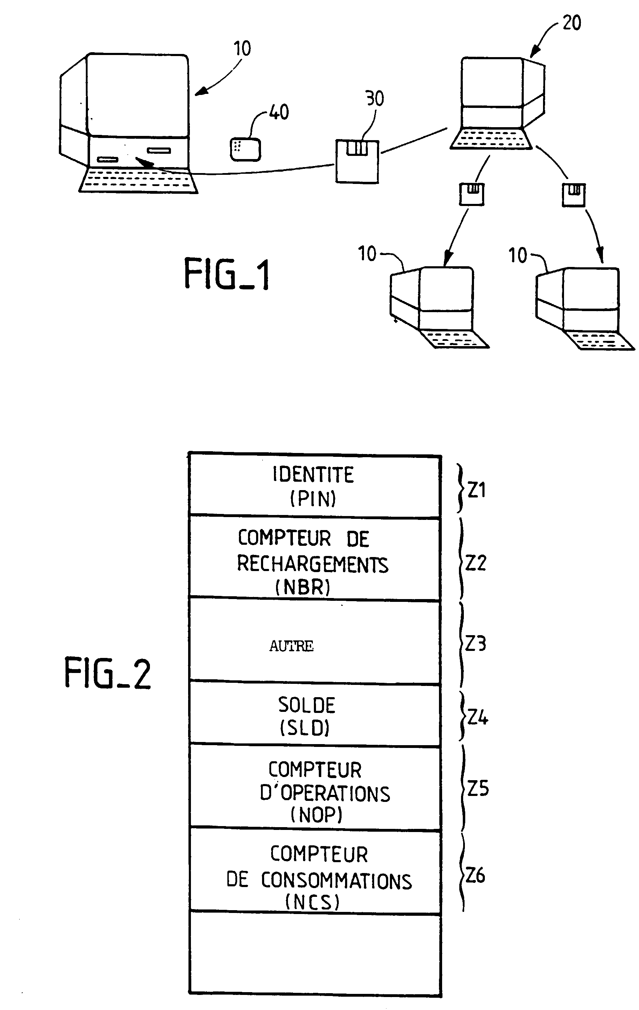

L'invention sera décrite en détail à propos d'un exemple d'application particulier (fig 1) qui est la gestion des cartes de restaurant d'entreprises. Les titulaires des cartes sont des employés appartenant à des entreprises ou organismes différents, la gestion des cartes étant assurée par un prestataire de service (entreprise de restauration).

On suppose que tous les employés d'une entreprise possèdent une carte de type "porte-monnaie électronique" permettant d'accéder au restaurant d'entreprise, le financement de cette carte étant pris en charge par le titulaire et/ou par l'entreprise.

Cycliquement, et dans cet exemple chaque mois, après avoir payé au prestataire de service une somme correspondant aux cartes à recharger, l'entreprise reçoit du prestataire un fichier contenant tous les ordres de rechargement de ses employés. Ce fichier est destiné à être utilisé par un ou plusieurs terminaux de rechargement 10 placés dans l'entreprise. Si l'entreprise occupe une surface importante plusieurs terminaux seront répartis sur cette surface afin que tous les employés puissent facilement accéder à un terminal le jour où ils doivent effectuer le rechargement de leur carte.

Le fichier de rechargement peut être transmis par le prestataire de service de différentes manières; par exemple la transmission peut se faire par une liaison directe ou une liaison par modem si les terminaux sont reliés directement ou par des lignes téléphoniques à un serveur 20 du prestataire; ou au contraire, la transmission peut se faire par transport physique d'une disquette magnétique 30 ou de tout autre moyen de mémoire non volatile (carte à puce, etc.) si les terminaux ne sont pas reliés au serveur 20 du prestataire.

Le fichier transmis par le prestataire est installé dans les terminaux de rechargement de l'entreprise. Le fichier de rechargement transmis aux terminaux peut être le même pour tous les terminaux. Il est alors dupliqué dans tous ces terminaux.

Ces terminaux peuvent être de simples ordinateurs personnels (PC) avec un lecteur de cartes à puce.

Les employés désirant recharger leur carte 40 peuvent se rendre auprès d'un terminal quelconque (l'invention permet d'éviter d'obliger un titulaire de carte à utiliser un terminal précis). La carte est introduite dans le lecteur de cartes du terminal 10 et se charge alors du montant prévu à l'avance par le prestataire de service, montant qui peut être constant pour tous les titulaires ou au contraire individualisé pour chacun. Le montant peut également varier en fonction de la date du rechargement.

Le prestataire de service gère les montants qui doivent être rechargés dans chaque carte.

La période pendant laquelle peut s'effectuer le rechargement peut être fixe ou variable. Par exemple on peut prévoir que le rechargement doit être effectué cycliquement le premier de chaque mois.

La carte ainsi rechargée peut être utilisée un certain nombre de fois entre deux rechargements pour consommer les services offerts par le restaurant d'entreprise, selon des modalités définies par le prestataire de service.

La description de l'exemple d'application qui précède permet de mieux comprendre le fonctionnement de l'invention.

Dans le procédé et le système de transaction selon l'invention, la carte comporte des moyens pour compter (et mémoriser de manière non-volatile) le nombre d'opérations de rechargement effectuées, ce compteur n'étant pas incrémenté lors des autres utilisations de la carte, c'est-à-dire en particulier lors de l'utilisation de la carte pour consommer des services.

On remarquera que dans d'autres applications, le compteur pourrait bien sûr mémoriser un autre type d'opérations que le rechargement: par exemple des opérations de visualisation d'état du compte.

La figure 2 représente schématiquement différentes zones de mémoire non volatile qui peuvent être prévues dans la carte pour mettre en oeuvre l'invention. Ces zones ont été représentées comme différentes parties d'une même mémoire non volatile MNV; mais bien entendu, ces zones de mémoire peuvent être physiquement séparées les unes des autres, c'est-à-dire qu'elles ne sont pas forcément toutes adressables par un même décodeur d'adresse unique. Il faut bien comprendre en effet que ces différentes zones ne sont pas forcément accessibles de la même manière. Par exemple certaines zones, telles que celle qui contient une donnée d'identification de la carte sont complètement inaccessibles en écriture, alors que d'autres (celle qui contient un solde par exemple) peuvent être accédées en écriture.

Sur la figure 2, on a représenté à titre d'exemple une première zone Z1 qui contient les données d'identification (PIN: Personal Identification Number) de la carte; ces données permettent d'identifier de manière univoque la carte, c'est-à-dire qu'il n'y a pas deux cartes ayant les mêmes données d'identification.

Une autre zone Z2 sert de compteur d'opérations de rechargement de la carte et contient un nombre NBR représentant donc le nombre de rechargements déjà effectués. Cette zone est incrémentée à chaque opération de rechargement mais n'est pas incrémentée lorsque la carte est utilisée pour d'autres opérations.

Une quatrième zone Z4 peut contenir un solde variable SLD, remis à jour au moment du rechargement et diminuant progressivement au fur et à mesure de la consommation de biens ou services à l'aide de la carte.

Une cinquième zone Z5 peut contenir un nombre NOP d'opérations effectuées avec la carte; ce nombre inclut à la fois les opérations de rechargement et les opérations de consommation de biens ou services. Mais la zone Z5 pourrait aussi contenir un nombre NCS représentant seulement les opérations de consommation de biens ou services, cette zone n'étant pas incrémentée lors des opérations de rechargement. En variante, on peut prévoir une zone Z5 pour le nombre NOP et une zone Z6 différente pour le nombre NCS.

Enfin, d'autres zones, référencées globalement sous la référence Z3 peuvent être prévues dans la mémoire MNV.

Pour assurer la sécurité du rechargement, on va s'arranger :
- d'une part pour que seuls soient possibles les rechargements de carte de titulaires autorisés (le prestataire définit les titulaires autorisés, repérés par le numéro d'identification personnelle PIN de la carte);
- d'autre part pour qu'il ne soit pas possible de faire un double rechargement d'une même carte en profitant de la multiplicité de terminaux simultanément préparés pour des rechargements de tous les titulaires.

Pour cela, on utilise à la fois le compteur d'opérations de rechargement présent dans la carte et le numéro d'identification de la carte, également présent dans la carte. Ces deux données permettent de calculer cycliquement le nouveau certificat, pour chaque carte, de le charger dans les terminaux ce certificat n'étant valable que pour une carte déterminée avec un état de compteur déterminé. Chaque carte calcule son propre certificat et le compare au certificat que lui communique le terminal.

L'état NBR du compteur de rechargements (Z2) varie de manière irréversible, c'est-à-dire que le contenu du compteur non volatil (ou le contenu de la zone de mémoire qui constitue ce compteur) représente un nombre entier variant toujours dans le même sens à chaque nouvelle opération de rechargement.

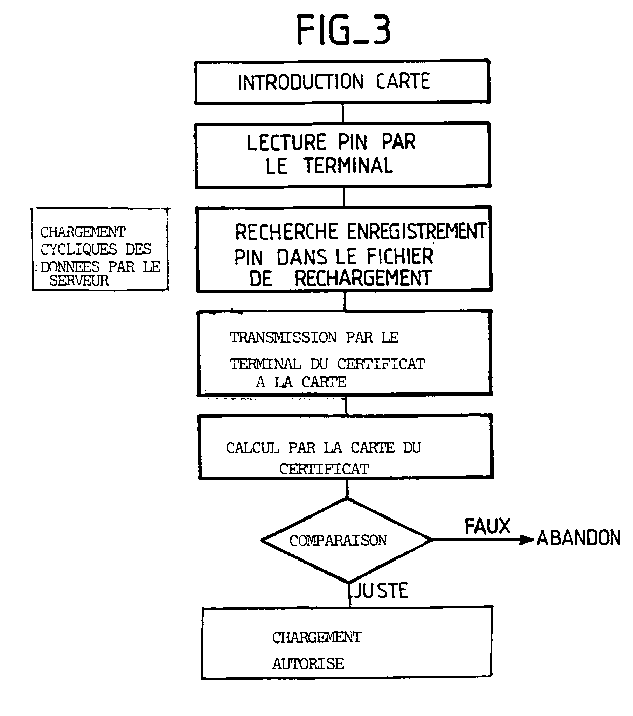

Le protocole de communication entre le terminal de rechargement et la carte se déroule de la façon décrite ci-dessous; les étapes sont rappelées sur l'organigramme de la figure 3 :
- le titulaire de la carte introduit sa carte dans le terminal de rechargement; les opérations qui suivent peuvent se dérouler automatiquement sans intervention du titulaire, mais on comprendra que dans certains cas on peut préférer une intervention du titulaire (notamment si le terminal est un PC pouvant servir à d'autres usages).
- le terminal lit dans la zone Z1 le numéro d'identification de la carte (PIN);
- le terminal recherche, dans le fichier de rechargement transmis par le prestataire, un numéro correspondant, pour s'assurer que le titulaire fait partie des titulaires a priori habilités;
- le terminal transmet à la carte le certificat d'authenticité qu'il possède pour cette carte
- de façon optionnelle, le terminal peut lire dans la carte le contenu CRT et vérifier si ce contenu correspond au nombre de comptage d'opération qu'il possède pour cette carte; à l'issue de cette option, la carte peut être rejetées s'il y a incompatibilité entre ces deux numéros avant tout autre contrôle. Il y aurait incompatibilité par exemple, si le numéro de CRT de la carte était supérieur à celui détenu par le terminal.
- la carte reçoit du terminal qui lit dans son fichier de rechargement, le certificat; la carte calcule, par un algorithme faisant intervenir le numéro d'identification PIN et le contenu NBR du compteur de rechargement, le certificat théorique qui devrait correspondre au certificat fourni dans la mesure où le numéro d'identification et où le nombre de rechargements sont les mêmes. Ainsi, le terminal ne possède pas l'algorithme de calcul et il se contente de prélever, dans le fichier de rechargement établi par le serveur, un certificat correspondant à la carte et au numéro d'ordre de l'opération de rechargement; l'avantage de cette manière de procéder est que l'algorithme est alors présent uniquement dans le serveur et n'a pas besoin d'être présent dans les terminaux; ceux-ci ne peuvent être alors détournés par fabrication du fichier de rechargement qui leur est transmis.
- la carte vérifie la compatibilité du certificat reçu et du certificat calculé, et autorise ou non les opérations de rechargement qui suivent en fonction du résultat de la vérification; en cas de non compatibilité, les mesures prises peuvent être diverses, par exemple : rejet de la carte, messages d'erreur, demande de nouvelle tentative, confiscation de la carte au bout de plusieurs tentatives manquées, mise en mémoire, dans un fichier des tentatives de fraude, du numéro de la carte ayant donné lieu à ces échecs, etc.

La carte autorise le rechargement et incrémente son compteur de transaction. L'incrémentation du compteur pourra être faite avant même que le rechargement n'ait lieu ou qu'il ne soit autorisé, ce qui permet de déceler une fraude. Le compteur de comptage du nombre de rechargement pourra par exemple être incrémenté dès qu'un utilisateur cherchera à faire recharger sa carte.
- en cas de succès de la vérification, le terminal ou la carte effectuent le rechargement : c'est une remise à jour de la zone de mémoire non volatile Z4 représentant un crédit disponible (en somme d'argent, en unités de compte, en nombre de repas, etc...); au besoin cette mise à jour s'effectue en cumulant les unités apportées au solde des unités présentes dans la carte.

Le calcul du certificat par la carte fera intervenir l'identification de la carte, et le nouveau contenu du compteur d'opérations de rechargement (ou l'ancien contenu incrémenté d'une unité).
- Pour cela, la carte possède bien entendu l'algorithme de calcul du certificat, de même que le serveur qui fournit les certificats aux terminaux.

La carte ayant subi avec succès la procédure de rechargement peut être utilisée pour des opérations de consommation de biens ou services (consommation de repas dans le restaurant d'entreprise).

Le terminal quant à lui inscrit dans le fichier de rechargement ou dans un autre fichier une information indiquant que pour cette carte le rechargement a été effectué. Cette information sera transmise ultérieurement au serveur chez le prestataire de service.

Si l'utilisateur se présente maintenant à un autre terminal de rechargement, au cours de la même période de rechargement, avec sa carte déjà rechargée, la procédure de rechargement ne pourra pas à nouveau se dérouler normalement puisque à la fois le contenu du compteur d'opérations et le certificat auront changé. L'irréversibilité du compteur empêche toute fraude : il n'est pas possible de remettre à sa valeur précédente le contenu de la zone Z2 lorsqu'il a changé.

Il peut arriver qu'un utilisateur n'ait pas rechargé sa carte à la fin de la période pendant laquelle le rechargement aurait dû s'effectuer. Dans ce cas, les rechargements suivants deviennent difficiles à gérer.

Pour que cette situation soit plus facilement gérée, on peut prévoir que le fichier de rechargement transmis aux terminaux comporte plusieurs enregistrements pour chaque carte, correspondant l'un à l'opération de rechargement en cours, l'autre aux dernières opérations de rechargement théoriques qui auraient dû être effectuées et qui en fait ne l'ont pas été. Pour un numéro de carte donné, on a donc au moins un enregistrement comportant une information de contenu de compteur correspondant à l'opération théorique en cours, avec un certificat correspondant, mais aussi éventuellement, pour certaines cartes deux enregistrements (ou plus) avec un même numéro de carte, et plusieurs contenus de compteur successifs (autant que d'opérations de rechargement non effectuées), et des certificats correspondants.

Dans ce cas, le terminal recherche toujours l'enregistrement correspondant au nombre de rechargements indiqué dans la carte. En effet, c'est le rechargement correspondant à ce nombre qui doit être fait en premier. Ceux d'avant sont supposés faits puisque la carte a été incrémentée jusqu'à ce contenu; ceux d'après ne doivent être effectués qu'ensuite. La procédure de rechargement peut alors être effectuée normalement vis-à-vis de cet enregistrement. Lorsqu'elle est effectuée, le titulaire peut procéder à nouveau à un rechargement, par exemple le dernier s'il n'y avait qu'un seul enregistrement de retard. Ce nouveau rechargement peut être effectué dans le même terminal ou un autre.

Dans ce qui précède, on a supposé que le numéro d'identification de la carte et le contenu du compteur de rechargements servent directement à calculer le certificat d'authenticité. Mais on peut prévoir aussi que ces éléments peuvent servir à établir des clés de cryptage des transmissions entre la carte et le terminal et non pas seulement le certificat.

Les étapes principales décrites ci-dessus et rappelées à la figure 3 représentent une procédure simple de transaction; il va de soi que des procédures plus complexes peuvent être mises en oeuvre pour accroître la sécurité; par exemple l'habilitation de la carte peut être renforcée par une procédure de vérification d'un code secret demandé par le terminal et introduit par l'utilisateur sur un clavier du terminal de rechargement.

Pour réaliser un compteur irréversible à partir d'une zone de mémoire Z2, il est classique maintenant d'utiliser des mémoires non-volatiles dont les cellules peuvent être programmées successivement les unes après les autres, l'effacement étant impossible. La programmation peut être effectuée sous la commande d'un microprocesseur lorsque la carte en comporte un, ou sous la commande de circuits simples lorsqu'il n'y a pas de microprocesseur.

Enfin, on comprendra que si la carte comporte plusieurs compteurs pour des types d'opérations différents, tels que ceux qui correspondent aux zones Z2 et Z6, les contenus de chacun de ces compteurs peuvent servir à des procédures de vérification pour les différents types d'opérations effectuées avec la carte.

On aura compris de l'exemple d'application détaillé ci-dessus que l'invention est particulièrement applicable à un système de gestion collective de nombreux restaurants d'entreprise ayant chacun plusieurs terminaux de rechargement à la disposition des employés de l'entreprise. Elle est en outre aisément transposable à n'importe quel autre type de services.

## Revendications

1. Procédé de transaction à partir de cartes à microprocesseur selon lequel des cartes sont rechargeables dans des terminaux de rechargement (10) dispersés et susceptibles de recevoir des données d'un serveur (20) et selon lequel il est prévu un compteur dans chaque carte pour comptabiliser le nombre d'opérations de rechargement, le procédé de transaction comportant les étapes suivantes :
- chargement cyclique depuis le serveur vers les terminaux de données relatives à chaque carte incluant, pour chaque carte, un numéro d'identification permettant de l'identifier, un numéro de comptage de rechargements pour le cycle en cours et un certificat d'authenticité obtenu à partir de ces numéros, ces données permettant à chaque carte de vérifier son droit à être rechargée,
et lors d'une opération de rechargement,
- introduction d'une carte (40) dans un terminal de rechargement quelconque,
- calcul par la carte d'un certificat d'authenticité à partir de données qu'elle contient, et qui incluent le contenu de son compteur de nombre de rechargements et son numéro d'identification,
- incrémentation par la carte de son compteur de nombre de rechargements,
- lecture par le terminal du numéro d'identification de la carte et transmission à la carte des données qui lui sont relatives et qui comprennent le certificat d'authenticité lui correspondant pour le cycle en cours,
- comparaison du certificat reçu au certificat calculé par la carte,
- acceptation par la carte d'un rechargement d'unités lorsque les certificats sont égaux.

2. Procédé de transaction à partir de cartes à microprocesseur selon lequel des cartes sont rechargeables dans des terminaux de rechargement (10) dispersés et susceptibles de recevoir des données d'un serveur (20) et selon lequel il est prévu un compteur dans chaque carte pour comptabiliser le nombre d'opérations de rechargement, le procédé de transaction comportant les étapes suivantes :
- chargement cyclique depuis le serveur vers les terminaux de données relatives à chaque carte incluant, pour chaque carte, un numéro d'identification permettant de l'identifier, un numéro de comptage de rechargements pour le cycle en cours et un certificat d'authenticité obtenu à partir de ces numéros, ces données permettant à chaque carte de vérifier son droit à être rechargée,
et lors d'une opération de rechargement,
- introduction d'une carte (40) dans un terminal de rechargement quelconque,
- lecture par le terminal du numéro d'identification de la carte et transmission à la carte des données qui lui sont relatives et qui comprennent le certificat d'authenticité lui correspondant pour le cycle en cours,
- calcul par la carte d'un certificat d'authenticité à partir de données qu'elle contient, et qui incluent le contenu de son compteur de nombre de rechargements et son numéro d'identification,
- incrémentation par la carte de son compteur de nombre de rechargements,
- comparaison du certificat reçu au certificat calculé par la carte,
- acceptation par la carte d'un rechargement d'unités lorsque les certificats sont égaux.

3. Procédé de transaction selon les revendications 1 ou 2, caractérisé en ce que les données relatives à une carte comportent en outre le montant du rechargement.

4. Procédé de transaction selon les revendications 1 ou 2 dans lequel les cartes comportent une mémoire non volatile, caractérisé en ce que, le compteur du nombre de rechargement est réalisé au moyen d'une zone (22) de mémoire non volatile de la carte dans laquelle le microprocesseur inscrit un nombre (NBR) représentant le compte du nombre d'opérations de rechargement effectuées, ce nombre étant incrémenté irréversiblement à chaque opération de rechargement.

5. Procédé de transaction selon l'une quelconque des revendications précédentes, caractérisé en ce que les données relatives à chaque carte peuvent comporter en outre un code d'identification (PIN).

6. Procédé de transaction selon l'une quelconque des revendications précédentes, caractérisé en ce que le terminal lit le contenu (NBR) du compteur d'une carte et le compare au numéro de comptage de rechargement qu'il possède pour le cycle en cours, et refuse de transmettre des données à la carte lorsque le contenu du compteur est supérieur ou égal au numéro de comptage de rechargement.

7. Utilisation du procédé de transaction selon l'une quelconque des revendications précédentes dans un système de gestion collective de nombreux restaurants d'entreprise ayant chacun plusieurs terminaux de rechargement dispersés à la disposition des employés de l'entreprise.

## Patentansprüche

1. Transaktionsverfahren für Chipkarten mit Mikroprozessor, bei dem die Karten bei verteilten und zum Empfang von Daten von einem Server (20) geeigneten Wiederaufladeanschlüssen (10) wiederaufladbar sind und bei dem auf jeder Karte zum Errechnen der Zahl der Wiederaufladevorgänge ein Zähler vorgesehen ist, wobei das Transaktionsverfahren die folgenden Schritte umfaßt:
- zyklisches Aufladen der Karte vom Server über die Anschlüsse mit Daten, die jede Karte betreffen, wobei bei jeder Karte diese eine Identifizierungszahl zu ihrer Identifizierung, eine Zahl zum Abzählen der Wiederaufladungen für den laufenden Zyklus und einen Echtheitsbeleg, der sich aus diesen Zahlen ergibt, enthalten, wobei diese Daten bei jeder Karte das Überprüfen der Berechtigung zum Wiederaufladen ermöglichen,
und bei dem Wiederaufladevorgang,
- Einführen einer Karte (40) in irgendeinen Wiederaufladeanschluß,
- Berechnen eines Echtheitsbelegs durch die Karte aufgrund der Daten, die sie enthält und die den Inhalt ihres Zählers für die Zahl der Wiederaufladungen und ihre Identifizierungsnummer enthalten,
- Inkrementieren ihres Zählers für die Zahl der Wiederaufladungen durch die Karte,
- Lesen der Identifizierungsnummer der Karte durch den Anschluß und Übertragen von Daten, die diese betreffen und die den Echtheitsbeleg umfassen, der ihr für den laufenden Zyklus entspricht, an die Karte,
- Vergleichen des empfangenen Belegs mit dem durch die Karte berechneten Beleg,
- Zulassen der Wiederaufladung mit Einheiten durch die Karte, wenn die Belege identisch sind.

2. Transaktionsverfahren für Chipkarten mit Mikroprozessor, bei dem die Karten bei verteilten und zum Empfang von Daten von einem Server (20) geeigneten Wiederaufladeanschlüssen (10) wiederaufladbar sind und bei dem auf jeder Karte zum Errechnen der Zahl der Wiederaufladevorgänge ein Zähler vorgesehen ist, wobei das Transaktionsverfahren die folgenden Schritte umfaßt:
- zyklisches Aufladen der Karte vom Server über die Anschlüsse mit Daten, die jede Karte betreffen, wobei bei jeder Karte diese eine Identifizierungszahl zu ihrer Identifizierung, eine Zahl zum Abzählen der Wiederaufladungen für den laufenden Zyklus und einen Echtheitsbeleg, der sich aus diesen Zahlen ergibt, enthalten, wobei diese Daten bei jeder Karte das Überprüfen der Berechtigung zum Wiederaufladen ermöglichen,
und bei dem Wiederaufladevorgang,
- Einführen einer Karte (40) in irgendeinen Wiederaufladeanschluß,
- Lesen der Identifizierungsnummer der Karte durch den Anschluß und Übertragen von Daten, die diese betreffen und die den Echtheitsbeleg umfassen, der ihr für den laufenden Zyklus entspricht, an die Karte,
- Inkrementieren ihres Zählers für die Zahl der Wiederaufladungen durch die Karte,
- Berechnen eines Echtheitsbelegs durch die Karte aufgrund der Daten, die sie enthält und die den Inhalt ihres Zählers für die Zahl der Wiederaufladungen und ihre Identifizierungsnummer enthalten,
- Vergleichen des empfangenen Belegs mit dem durch die Karte berechneten Beleg,
- Zulassen der Wiederaufladung mit Einheiten durch die Karte, wenn die Belege identisch sind.

3. Transaktionsverfahren nach Anspruch 1 oder 2,
dadurch gekennzeichnet, daß
die Daten, die die Karte betreffen, zusätzlich den Betrag der Wiederaufladung umfassen.

4. Transaktionsverfahren nach Anspruch 1 oder 2,
bei dem die Karten einen nichtflüchtigen Speicher umfassen,
dadurch gekennzeichnet, daß
der Zähler für die Anzahl der Wiederaufladungen durch einen Bereich (22) im nichtflüchtigen Speicher der Karte realisiert ist, in den der Mikroprozessor eine Zahl (NBR) einschreibt, die die Zahl der ausgeführten Wiederaufladevorgänge angibt, wobei diese Zahl irreversibel bei jedem Wiederaufladungsvorgang inkrementiert wird.

5. Transaktionsverfahren nach einem der vorangehenden Ansprüche,
dadurch gekennzeichnet, daß
die Daten, die jede Karte betreffen, außerdem einen Identifizierungscode (PIN) enthalten können.

6. Transaktionsverfahren nach einem der vorangehenden Ansprüche,
dadurch gekennzeichnet, daß
der Anschluß den Inhalt (NBR) des Zählers einer Karte liest und ihn mit der Zahl für die Anzahl der Wiederaufladungen vergleicht, die er für den laufenden Zyklus kennt, und daß er das Übertragen von Daten auf die Karte verweigert, wenn der Inhalt des Zählers größer oder gleich der Zahl für die Anzahl der Wiederaufladungen ist.

7. Verwendung des Transaktionsverfahrens nach einem der vorangehenden Ansprüche in einem System zur gemeinsamen Verwaltung mehrerer Restaurants eines Unternehmens, wobei jedes mehrere verteilte Aufladeanschlüsse zur Verfügung der Angestellten des Unternehmens hat.

## Claims

1. A transaction procedure using micro-processor cards, by means of which the cards can be topped-up in top-up terminals (10) at various locations and are capable of receiving data from a server (20), and a counter is provided in each card to keep track of the number of top-up operations, the transaction procedure comprising the following steps:
- a cycle of down-loading, from the server to the terminals, data pertaining to each card including, for each card, an identification number allowing it to be identified, a top-up transaction number for the cycle in progress and a certificate of authenticity generated on the basis of these numbers, these data allowing each card to verify its right to be re-loaded and,
during a re-loading transaction,
- a card (40) is inserted in any top-up terminal,
- the card computes a certificate of authenticity based on the data it contains, which includes the content of its top-up transaction-number counter and its identification number,
- the card increments its top-up transaction counter,
- the terminal reads the identification number of the card and transmits to it data pertaining to the card and including the certificate of authenticity corresponding to the card for the cycle in progress,
- the card accepts a top-up of units if the certificates are identical.

2. A transaction procedure using micro-processor cards, by means of which the cards can be topped-up in top-up terminals (10) at various locations and are capable of receiving data from a server (20), and a counter is provided in each card to keep track of the number of top-up operations, the transaction procedure comprising the following steps:
- a cycle of down-loading, from the server to the terminals, data pertaining to each card including, for each card, an identification number allowing it to be identified, a top-up transaction number for the cycle in progress and a certificate of authenticity generated on the basis of these numbers, these data allowing each card to verify its right to be topped-up and,
during a top-up transaction,
- a card (40) is inserted in any re-loading terminal,
- the terminal reads the identification number of the card and transmits to it data pertaining to the card and including the certificate of authenticity corresponding to the card for the particular cycle in progress,
- the card computes the certificate of authenticity on the basis of data it contains and which includes the contents of its top-up transaction-number counter and its identification number,
- the card increments its top-up transaction-number counter,
- the certificate received is compared with the certificate computed by the card,
- the card accepts a top-up of units if the certificates are identical.

3. A transaction procedure as claimed in claims 1 or 2, characterised in that the data pertaining to a card also incorporates the amount of the top-up.

4. A transaction procedure as claimed in claims 1 or 2, in which the cards have a non-volatile memory, characterised in that the top-up transaction-number counter comprises at least one non-volatile memory zone of the card (22) to which the micro-processor card writes a number (NBR) representing the number-count of the top-up transaction completed, this number being irreversibly incremented with each top-up transaction.

5. A transaction procedure as claimed in any one of the preceding claims, characterised in that the data pertaining to each card may also include an identification code (PIN).

6. A transaction procedure as claimed in any one of the preceding claims, characterised in that the terminal reads the contents (NBR) of the counter of a card and compares it with the top-up number-count which it holds for the cycle in progress and refuses to transmit data to the card if the content of the counter is greater than or equal to the top-up number-count.

7. Use of the transaction procedure as claimed in any one of the preceding claims in a collective management system for a large number of company restaurants each having several top-up terminals distributed at various locations for use by company employees.
